# EUROPEAN PATENT APPLICATION

(11) **EP 3 229 394 A1**
(43) Date of publication of application: **11.10.2017**
(21) Application number: 16290064.1
(22) Date of filing: 07.04.2016
(51) Int. Cl.: H04L 1/16, H04L 1/18, H04L 1/00

(54) **DEVICE FOR A RADIO COMMUNICATION NETWORK AND METHOD OF OPERATING SUCH DEVICE**

(71) Applicant: ALCATEL LUCENT, 92100 Boulogne-Billancourt (FR)
(72) Inventor: WILD, Thorsten, 70435 Stuttgart (DE); SCHAICH, Frank, 70435 Stuttgart (DE)
(74) Representative: DREISS Patentanwälte PartG mbB

(57) **Abstract**

The invention relates to a device (10) for a cellular communications network (1000), wherein said device (10) is configurable to perform the following steps: receive (210) first uplink transmission data (ud1) transmitted in an uplink direction from a further device (20) towards a base station (100) of said communications network (1000), store (211) at least part of said received first uplink transmission data (ud1) or a representation thereof, monitor (212) wether the base station (100) transmits a NACK signal (N1) towards said further device (20), said NACK signal (N1) indicating that the base station (100) did not successfully receive said first uplink transmission data (ud1), and, if the base station (100) transmits a NACK signal (N1) towards said further device (20), transmit (214) second uplink transmission data (ud2), which at least partially characterizes said first uplink transmission data (ud1) and is generated depending on the stored data, towards the base station (100).

## Description

### Field of the invention

The present invention relates to a device for a radio communications network, and to a method of operating such device.

The invention further relates to a base station of a cellular communications network, and to a method of operating such base station and/or network equipment of a radio communications network.

The invention further relates to a first communication device for exchanging data with a second communication device and a third communication device, and to a method of operating such first communication device.

### Background

One of the key upcoming service trends for communications systems, particularly cellular communications systems, such as e.g. fourth generation, 4G, or fifth generation, 5G, systems, is mission critical communication (MCC). Such kind of services (e.g. for industrial automation or remote controlling of objects) require a very high reliability and typically also low latencies. In conjunction with mobility support, this high reliability requires a good coverage. Also, these trends and the resulting requirements are not limited to cellular communications systems, but also applicable to e.g. peer-to-peer communications systems, systems supporting ad-hoc communications, and the like.

### Summary

In view of this, it is an object of the present invention to provide an improved device and method of operating such device which enable low latencies and high reliability. Further, it is an object of the present invention to provide an improved base station, method of operating such base station, and method of operating network equipment. Still further, it is an object of the present to provide an improved first communication device and method of operating such first communication device.

Regarding the abovementioned device, according to a first aspect, said object is achieved by said device including at least one processor, a memory, and a transceiver (comprising transmitter and receiver functionality) and being configurable to: receive first uplink transmission data transmitted in an uplink direction from a further device towards a base station of said communications network, store (preferably temporarily) at least part of said received first uplink transmission data or a representation thereof, whereby stored data is obtained, monitor whether the base station transmits a NACK signal towards said further device, said NACK signal indicating that the base station did not successfully receive said first uplink transmission data, and, if the base station transmits a NACK signal towards said further device, transmit second uplink transmission data, which at least partially characterizes said first uplink transmission data and is generated depending on the stored data, towards the base station. This advantageously enables to provide the base station with said second uplink transmission data from a further source, i.e. the device according to the embodiments. As the device according to the embodiments may have better channel conditions for its data transmissions to the base station, particularly for transmitting the second uplink transmission data towards the base station, than the further device, an efficient "re-transmission" may be effected, where the device according to the embodiments contributes to said "re-transmission". In view of this, the device according to the embodiments may also be denoted as a "supporting device", as compared to the further device, because the device according to the embodiments supports the further device, which may be a conventional device, in transmitting data to the base station.

According to an embodiment, the received data may be stored temporarily and may be deleted after a certain criterion is fulfilled. For example, when the device receives said first uplink transmission data transmitted in an uplink direction from a further device towards a base station of said communications network, a timer may be started, and after expiry of said timer, said stored data may be deleted. According to a preferred embodiment, said stored data is only deleted if said timer is expired and if - in addition to said expired timer - no NACK signal has been received by the device in the time interval between start and expiry of said timer. Thus, advantageously, memory resources of the device may be saved and unused data can be deleted again.

According to an embodiment, the device and the further device may be devices, e.g. terminals, for a cellular communications network according to the Long Term Evolution, LTE, or LTE Advanced, LTE-A, standard. Hence, the device and the further device may be configured to operate according to the LTE standard (3GPP, Third Generation Partnership Project, standardization Releases 8, 9) or LTE-A standard (3GPP standardization Releases 10, 11, 12 and above). Likewise, according to an embodiment, the base station may be a base station for said cellular communications network according to the LTE or LTE-A standard and may correspondingly be configured to operate according to the LTE or LTE-A standard.

Examples of standardization documents related to the LTE standard and the LTE-A standard as well as further systems as referred to herein are the following documents, which are incorporated herein by reference:
[1] 3GPP TS 36.211 V12.6.0, June 2015; Technical Specification Group Radio Access Network; Evolved Universal Terrestrial Radio Access (E-UTRA); Physical channels and modulation,
[2] 3GPP TS 36.300 V12.7.0, September 2015; Technical Specification Group Radio Access Network; Evolved Universal Terrestrial Radio Access (E-UTRA) and Evolved Universal Terrestrial Radio Access Network (E-UTRAN); Overall description,
[3] 3GPP TS 36.331 V12.7.0, September 2015; Technical Specification Group Radio Access Network; Evolved Universal Terrestrial Radio Access (E-UTRA); Radio Resource Control (RRC),
[4] 3GPP TS 36.213 V12.6.0, June 2015; Technical Specification Group Radio Access Network; Evolved Universal Terrestrial Radio Access (E-UTRA); Physical layer procedures,
[5] 3GPP TS 23.203 V12.11.0, December 2015; Technical Specification Service Architecture; Policy and charging control architecture,
[6] Recommendation ITU-R M.2083: IMT Vision - "Framework and overall objectives of the future development of IMT for 2020 and beyond".

A technical summary of 5G systems as referred to herein is provided by "Understanding 5G: Perspectives on future technological advancements in Mobile". Analysis, December 2014; available in the World Wide Web at https://gsmaintelligence.com/research/?file=141208-5g.pdf&download from GSMA Intelligence, which is also incorporated herein by reference.

It is noted that the principle according to the embodiments is also applicable to more recent (and also future) versions of these documents and standards, respectively.

It is noted that the principle according to the embodiments is also applicable to other system architectures and radio communications systems than cellular communications systems, e.g. peer-to-peer communications systems, systems supporting ad-hoc communications, and the like.

In addition to its compatibility with the LTE or LTE-A standard in accordance with the aforementioned embodiment, the device according to the embodiments is configurable and/or configured to perform the method according to the embodiments thus enhancing the conventional system by the functionality according to the embodiments.

In the context of the present application, the expression "configurable" defines that the device may include at least one operating mode in which the device is acting according to at least one aspect of the embodiments, e.g. acting as a supporting device. I.e., according to some embodiments, the device may also comprise further operating mode(s) wherein no supporting device functionality in the sense of the embodiments is provided.

Particularly, the expression "configurable" also includes a device which is, for example in a static configuration, configured to perform aspects of the embodiments. In addition, the expression "configurable" also includes a device which can be configured (e.g., by a further device such as a base station or other control mechanism, which may e.g. be implemented remotely or locally to the device) to perform aspects of the embodiments, but which comprises at least one operating mode in which it does not perform aspects of the embodiments.

As an example, according to an embodiment, a device may be provided which in a first operating mode acts as a conventional LTE-compatible terminal, but which, in a second operating mode, implements aspects according to the embodiments, e.g. acting as a supporting terminal (e.g., in addition to the conventional LTE-compatible operation), wherein local or remote configuration may control whether the terminal assumes its first or second operation mode.

According to a further aspect, said at least one operating mode in which the device is acting as a supporting device is, preferably remotely, configurable in order instruct the device to perform the method according to the embodiments or not to perform the method according to the embodiments.

According to a further embodiment, said configurability is remotely controllable, i.e. the device is remotely configurable, for example by a base station or other network equipment, to operate in the respective operating mode or not.

According to a further embodiment, a local configurability (e.g., controlled depending on time and/or operational parameters of the device and/or detected neighboring devices) is also possible alternatively or in addition to remote configurability.

According to a further aspect, the device may also be configurable or configured to perform the method according to the embodiments.

According to a further aspect, the device according to the embodiments may e.g. comprise or constitute at least one of the following: end user equipment, LTE UE (User equipment), M2M device (machine-to-machine), Smartphone, Mobile terminal, WiFi stick, Sensor with radio transceiver, 5G transceiver, 5G radio terminal with device-to-device communication support.

According to an aspect, one or more devices according to the embodiments may be present in a radio cell of the cellular communications network, together with one or more conventional LTE or LTE-A capable devices or terminals, respectively. Advantageously, the conventional devices or terminals are not required to be modified in any way to enable the principle according to the embodiments to be applied to the cellular communications network. Although, according to an embodiment, not even the base station of the cellular communications network is required to be modified in view of a conventional LTE- or LTE-A capable base station, for the principle of the embodiments to be applied to the cellular communications network, however, it may be beneficial to also provide enhancements to a base station or to (other) network equipment of the cellular communications network according to further embodiments as explained further below.

According to an embodiment, the NACK signal transmitted from the base station towards the device may be a NACK signal of a conventional H-ARQ (hybrid automated repeat request) mechanism as known from the LTE or LTE-A standards.

From conventional LTE systems it is known that a typical answer of cellular systems to provide high reliability and good coverage is hybrid automated repeat request (H-ARQ) retransmissions. The more retransmissions are used, the more reliability can be achieved. However, a large number of retransmissions also increases latency. In case a mobile station (MS, "terminal" or "mobile device") is in a bad channel situation (e.g. disfavorable shadowing), many retransmissions may be required with the conventional H-ARQ approach which is disfavorable from a latency perspective. The principle according to the embodiments significantly improves H-ARQ efficiency in that "re-transmissions" of identical data or data depending on previously transmitted data are provided by the device according to the embodiments, i.e. a further device as seen from a sending further (conventional) terminal's perspective. This way, as the base station now gets a signal from multiple sources (first source: at least one device according to the embodiments; further source: (conventional) further device, e.g. terminal), where the device according to the embodiments (which may also be denoted as "supporting device" or "supporting mobile station") may have even better radio link qualities than the conventional device, the reliability is greatly enhanced, also by the additional transmit diversity of the supporting distributed antennas of different devices (e.g., terminal(s) according to the embodiments and further terminal). As a consequence, in almost all cases it is expected that by adopting the principle according to the embodiments a single retransmission is sufficient to ensure very high reliability and improved coverage. Thus, advantageously, a well-defined low latency can be achieved.

According to further embodiments, the NACK signal transmitted from the base station towards the device may also represent a control signal indicating that the base station did not successfully receive said first uplink transmission data, however, without forming part of a HARQ mechanism. In other words, according to these embodiments, the NACK signal may be a simple control signal the base station may use to request a re-transmission from the further device, i.e. a typical "resend request". Similarly, ARQ (automatic repeat requests) may also be used, according to further embodiments.

As is well known, when using H-ARQ, incremental redundancy or chase combining may be used. Alternatively, other forms of soft combining may be used.

Evidently, the principle according to the embodiments may be applied to re-transmission schemes with simple NACK signals in the sense of re-transmission requests, as well as with existing ARQ or H-ARQ schemes, which may also provide for incremental redundancy.

Hence, according to an embodiment, said second uplink transmission data, which is preferably generated depending on the stored data, may be basically (or strictly) identical with the first uplink data transmitted from the further device to the base station. In this case, the transmission of the second uplink transmission data from the device according to the embodiments to the base station represents a true re-transmission. According to further embodiments, said second uplink transmission data may also comprise parts of said first uplink data and/or may comprise data derived from said first uplink data, e.g. portions of said first uplink data together with an increased amount of redundancy.

According to a further embodiment, said device is configurable (or configured) to use for the transmission of the second uplink transmission data towards the base station the same transmission resources as used by the further device for a re-transmission of said first uplink transmission data and/or a transmission of third uplink transmission data which depend on said first uplink transmission data. I.e., the further device may perform a conventional retransmission, retransmitting the first uplink data to the base station, or may transmit third uplink transmission data which may comprise a portion of said first uplink transmission data and additional redundancy, as already mentioned above. For these transmissions, specific transmission resources are used by the further device, which are e.g. controlled by the base station or by common knowledge of base station and the further device, e.g. due to standardization. These specific transmission resources may beneficially also be used by the device according to the embodiments to transmit its second uplink transmission data, whereby an over-the-air-combining, i.e. superposition of the different signals at the receiver side, of the retransmitted signals (retransmitted first uplink transmission data or third uplink transmission data from the further device and second uplink transmission data of the device according to the embodiments) is achieved, which saves transmissions resources and further contributes to reduced latency.

According to an embodiment, the transmission resources may e.g. comprise time and frequency resources, e.g. physical resource blocks, PRBs, as known from the LTE standard, cf. Fig. 5.2.1.-1 on page 16 of 3GPP TS 36.211 V12.6.0. According to further embodiments, the transmission resources may also comprise code resources and the like.

According to further embodiments, it is also possible that the device uses different (time and/or frequency and/or code and/or other) transmission resources for transmitting the second uplink data than the further device for retransmitting the first or transmitting the third uplink data.

According to a further embodiment the device is configurable (or configured) to perform the following steps: receive first downlink transmission data transmitted in a downlink direction from the base station towards a further device, store at least part of said received first downlink transmission data or a representation thereof, monitor whether the further device transmits a NACK signal towards said base station, said NACK signal indicating that the further device did not successfully receive said first downlink transmission data, and, if the further device transmits a NACK signal towards said base station, transmit second downlink transmission data, which at least partially characterizes said first downlink transmission data and is generated depending on the stored data, towards the further device. While the embodiments explained above advantageously enable supporting uplink transmissions from a further device to a base station, the present embodiment advantageously enables supporting downlink transmissions from a base station to the further device by means of the device according to the embodiment.

According to a further embodiment, the device is configurable (or configured) to receive from said base station first control information characterizing at least one of the following: a) transmission resources related to data transmissions between the further device and the base station, b) transmission resources related to data transmissions between the device and the base station, c) instructions for the device to perform the method steps according to one of the preceding claims. Hence, the device may dynamically, i.e. during an active operating state, be notified of the transmission resources relevant to its supporting role in the transmission system.

According to an embodiment, the first control information may characterize at least transmission resources related to data transmissions between the further device and the base station, e.g. a) for a transmission of said first uplink transmission data from the further device towards the base station and/or b) for a transmission of said NACK signal from said base station towards said further device and/or c) for a re-transmission of said first uplink transmission data from the further device towards the base station and/or d) for a transmission of third uplink transmission data, which depend on said first uplink transmission data, from the further device towards the base station.

According to a further embodiment, the first control information may characterize at least transmission resources related to data transmissions between the device and the base station, e.g. for a transmission of said second uplink transmission data towards the base station.

According to a further embodiment, the first control information may characterize at least instructions for the device to perform single method steps and/or a complete procedure according to the embodiments. According to a variant, the first control information may also be used by a base station to instruct a specific device to perform the procedure according to the embodiments, i.e. to act as a "supporting device" or "supporting mobile station". Evidently, it is possible that a base station, according to an embodiment, may instruct a specific device to act as a "supporting device" or "supporting mobile station" only for an uplink data transmission direction or only for a downlink data transmission direction, or for both uplink and downlink data transmission directions.

Regarding the abovementioned device, according to a second aspect, said object is achieved by a device for a radio communications network, e.g. a cellular communications network, wherein said device includes at least a processor, a memory and a transceiver and is configurable (or configured) to perform the following steps: receive first downlink transmission data transmitted in a downlink direction from the base station towards a further device, store at least part of said received first downlink transmission data or a representation thereof, monitor whether the further device transmits a NACK signal towards said base station, said NACK signal indicating that the further device did not successfully receive said first downlink transmission data, and, if the further device transmits a NACK signal towards said base station, transmit second downlink transmission data, which at least partially characterize said first downlink transmission data and is generated depending on the stored data, towards the further device. This advantageously enables to provide the further device with said second downlink transmission data from a further source, i.e. the device according to the embodiments. As the device according to the embodiments may have better channel conditions for its data transmissions to the further device, particularly for transmitting the second downlink transmission data towards the further device, than the base station, an efficient "re-transmission" may be effected, where the device according to the embodiments contributes to said "re-transmission". In view of this, the device according to the embodiments may also be denoted as a "supporting device", as compared to the further device, because the device according to the embodiments supports the base station in transmitting data to the further device.

While the present embodiment provides for a "supporting device" concerning downlink transmissions from a base station to a further device, the previous embodiments explained above primarily provide for a "supporting device" functionality in the uplink direction. Insofar, the possible variations and embodiments and their advantages explained above also apply to the present embodiment.

However, according to some embodiments it is possible that a device according to the principle of the embodiments acts both in uplink and downlink transmission direction as a "supporting device".

According to an embodiment, as with the embodiments explained above, the device and the further device may be devices, e.g. terminals, for a cellular communications network according to the Long Term Evolution, LTE, or LTE Advanced, LTE-A, standard. Hence, the device and the further device may be configured to operate according to the LTE standard (3GPP, Third Generation Partnership Project, standardization Releases 8, 9) or LTE-A standard (3GPP standardization Releases 10, 11, 12 and above). Likewise, according to an embodiment, the base station may be a base station for said cellular communications network according to the LTE or LTE-A standard and may correspondingly be configured to operate according to the LTE or LTE-A standard.

According to a further embodiment, said device is configurable (or configured) to use for the transmission of the second downlink transmission data towards the further device the same transmission resources as used by the base station for a re-transmission of said first downlink transmission data and/or a transmission of third downlink transmission data which depend on said first downlink transmission data, whereby an over-the-air-combining of the retransmitted signals (retransmitted first downlink transmission data or third downlink transmission data from the base station and second downlink transmission data of the device according to the embodiments) is achieved, which saves transmissions resources and further contributes to reduced latency.

According to a further embodiment, the transmission of said second downlink transmission data, which is a D2D transmission from the device towards the further device, may be performed in an overlay/underlay mode, i.e. in superposition with other traffic from the base station or other devices. Due to the relative proximity of the device to the further device, this overlayed or underplayed transmission may be successful even if the currently used transmission resources are also used by (more remote) devices.

According to a further embodiment of the second aspect, the device is configurable (or configured) to receive from said base station first control information characterizing at least one of the following: a) transmission resources related to data transmissions between the base station and the further device the, b) transmission resources related to data transmissions between the device and the further device, c) instructions for the device to perform single method steps and/or a complete procedure according to the embodiments. Hence, the device may dynamically, i.e. during an active operating state, be notified of the transmission resources relevant to its supporting role in the transmission system.

According to an embodiment, the first control information may characterize at least transmission resources related to data transmissions between the base station and the further device, e.g. a) for a transmission of said first downlink transmission data from the base station towards the further device and/or b) for a transmission of said NACK signal from said further device towards said base station and/or c) for a re-transmission of said first downlink transmission data from the base station towards the further device and/or d) for a transmission of third downlink transmission data, which depend on said first downlink transmission data, from the base station towards the further device.

According to a further embodiment, the first control information may characterize at least transmission resources related to data transmissions between the device and the further device, e.g. for a transmission of said second downlink transmission data towards the further device.

According to a further embodiment, the first control information may characterize at least instructions for the device to perform individual method steps and/or a complete procedure according to the embodiments. According to a variant, the first control information may also be used by a base station to instruct a specific device to perform the procedure according to the embodiments, i.e. to act as a supporting device" or "supporting mobile station". Evidently, it is possible that a base station, according to an embodiment, may instruct a specific device to act as a "supporting device" or supporting mobile station" only for an uplink data transmission direction or only for a downlink data transmission direction, or for both uplink and downlink data transmission directions.

According to a further aspect, a method of operating a device comprising the following steps is proposed: A) receiving first uplink transmission data transmitted in an uplink direction from a further device towards a base station of said communications network, preferably storing at least part of said received first uplink transmission data or a representation thereof, monitoring whether the base station transmits a NACK signal towards said further device, said NACK signal indicating that the base station did not successfully receive said first uplink transmission data, and, if the base station transmits a NACK signal towards said further device, transmitting second uplink transmission data, which at least partially characterize said first uplink transmission data and is generated depending on the stored data, towards the base station. This way, a method of operating a "supporting device" or "supporting mobile station" is provided, which supports a further device / further devices with data transmissions and/or re-transmissions in an uplink direction.

According to a further aspect, a method of operating a device comprising the following steps is proposed: B) receiving first downlink transmission data transmitted in a downlink direction from the base station towards a further device, preferably storing at least part of said received first downlink transmission data or a representation thereof, monitoring whether the further device transmits a NACK signal towards said base station, said NACK signal indicating that the further device did not successfully receive said first downlink transmission data, and, if the further device transmits a NACK signal towards said base station, transmitting second downlink transmission data, which at least partially characterizes said first downlink transmission data and is generated depending on the stored data, to the further device. This way, a method of operating a "supporting device" or "supporting mobile station" is provided, which supports a base station with data transmissions and/or re-transmissions in a downlink direction.

According to a further embodiment, it is also possible to provide a method of operating a device combining both aforementioned aspects A) and B) thus providing a method of operating a "supporting device" or "supporting mobile station", which supports both a base station with data transmissions and/or re-transmissions in a downlink direction and a further device / further devices with data transmissions and/or re-transmissions in an uplink direction.

It is emphasized that according to further embodiments of the method of operating a device, further method steps may be employed which have been explained above with reference to embodiments of the device.

Regarding the abovementioned base station, according to a first aspect, said object is achieved by the feature combination of claim 8, alternative A).

Regarding the abovementioned base station, according to a second aspect, said object is achieved by the feature combination of claim 8, alternative B).

According to a further embodiment, it is also possible to provide a base station combining both aforementioned aspects A) and B) thus providing a base station which may instruct a device to operate as a "supporting terminal" or "supporting mobile station" in either an uplink direction or in a downlink direction or in both an uplink direction and a downlink direction.

According to a further embodiment, the base station is configured to transmit to the device first control information characterizing at least one of the following:
a) transmission resources related to data transmissions between the further device and the base station, b) transmission resources related to data transmissions between the device and the base station, c) instructions for the device to perform individual method steps and/or a complete procedure according to the embodiments. Generally, the first control information may comprise any information enabling the device according to the embodiments to provide its supporting role for either uplink or downlink transmissions or for both uplink and downlink transmissions.

According to a further embodiment, said base station is configured to determine one or more candidate devices of said communications network, which may preferably be selected as supporting devices for supporting the base station and/or at least one further device of said communications network with data transmissions towards at least one further device and/or the base station, respectively, wherein said step of determining one or more candidate devices is performed depending on at least one of the following criteria: a) a device-to-device, D2D, link quality characterizing one or more parameters of a direct communication channel between a device and a further device, b) a status of an electric energy supply, particularly a battery status, of said device, c) processing capabilities of a processing unit of said device, d) device-specific control information indicating that said device may not operate as a supporting device. This way, candidate devices which may advantageously contribute to an overall system performance and particularly reduced latency and increased reliability may efficiently be determined.

According to a further embodiment, said base station is configured to select at least one candidate device as a supporting device for supporting the base station and/or at least one further device of said communications network with data transmissions towards at least one further device and/or the base station, respectively. Depending on radio propagation properties and the presence of candidate devices, a certain amount of them may flexibly be designated as supporting devices, e.g. as supporting terminals, thus enabling to dynamically increase reliability and reduce latency within the communications network, whereby e.g. a specific radio cell may be optimized for MCC. Conversely, if no MCC optimization is required for some time, the base station may also instruct the supporting devices to stop their supporting procedures according to the embodiments thus reducing their processing load.

Regarding the abovementioned method of operating a network equipment, according to a first aspect, said object is achieved by claim 12, alternative A). Regarding the abovementioned method of operating a network equipment, according to a second aspect, said object is achieved by claim 12, alternative B). It is noted that although the first and second aspects of the method of operating a network equipment according to claim 12 are termed "alternatives A), B)", according to some embodiments, it is also possible to provide a method of operating the network equipment comprising the method steps of both alternatives A), B) of claim 12.

According to further embodiments, the network equipment or base station may configure a device according to the embodiments to perform a method according to the embodiments, e.g. instruct the device to assume a certain operating mode in which it may act as a supporting device or supporting terminal as explained above.

Further advantageous embodiments are provided by dependent claim 13.

Regarding the abovementioned first communication device, according to a further aspect, said object is achieved by said first communication device being configurable (or configured) to perform the following steps: receive first transmission data transmitted from the second communication device to the third communication device, preferably store at least part of said first transmission data or a representation thereof, monitor whether the third communication device transmits a NACK signal to said second communication device, said NACK signal indicating that the third communication device did not successfully receive said first transmission data, and, if the third communication device transmits a NACK signal to said second communication device, transmit second transmission data, which at least partially characterizes said first transmission data and is preferably generated depending on the stored data, to the third communication device. This way, the first communication device may advantageously support data transmissions between the second and third communication device.

It is again noted that the principle according to the embodiments is also applicable to other system architectures than (cellular) radio communications systems, e.g. peer-to-peer communications systems, systems supporting ad-hoc communications, and the like, which is reflected by the afore-explained embodiment with the first, second, and third communication device. Further embodiments and variations of said first communication device may be provided with modifications and details similar to those explained above for the terminal- and base-station related aspects of the embodiments.

A further solution to the object of the present invention is provided by a method of operating a first communication device, said method comprising the aforementioned steps.

Yet another solution to the object of the present invention is provided by a computer program product embodied on a non-transitory computer readable medium for performing operations, wherein the computer program product comprises instructions, that when executed by a processor, perform the operations of a method according to at least one of the claims 12, 13 and/or the operations of a method the device according to the embodiments may execute.

### Brief description of the figures

Further features, aspects and advantages of the present invention are given in the following detailed description with reference to the drawings in which:
- Figure 1: schematically depicts a radio communications system with a device according to an embodiment,
- Figure 2a: schematically depicts a communication diagram according to an embodiment,
- Figure 2b: schematically depicts a communication diagram according to a further embodiment,
- Figure 3a: schematically depicts a simplified flow-chart of a method of operating a device according to an embodiment,
- Figure 3b: schematically depicts a simplified flow-chart of a method of operating a device according to a further embodiment,
- Figure 4: schematically depicts a radio communications system with a device according to a further embodiment,
- Figure 5a, 5b: schematically depict communication diagrams according to further embodiments,
- Figure 6a, 6b: schematically depict simplified flow-charts of methods of operating a device according to further embodiments,
- Figure 7: schematically depicts a simplified flow-chart of a method of operating a base station according to a further embodiment,
- Figure 8: schematically depicts a radio communications system according to a further embodiment,
- Figure 9: schematically depicts a block diagram of a device according to an embodiment,
- Figure 10: schematically depicts a block diagram of a base station according to an embodiment,
- Figure 11: schematically depicts a radio communications system with first, second and third communications devices a according to an embodiment, and
- Figure 12: schematically depicts a simplified flow-chart of a method of operating a first communications device according to an embodiment.

### Description of the embodiments

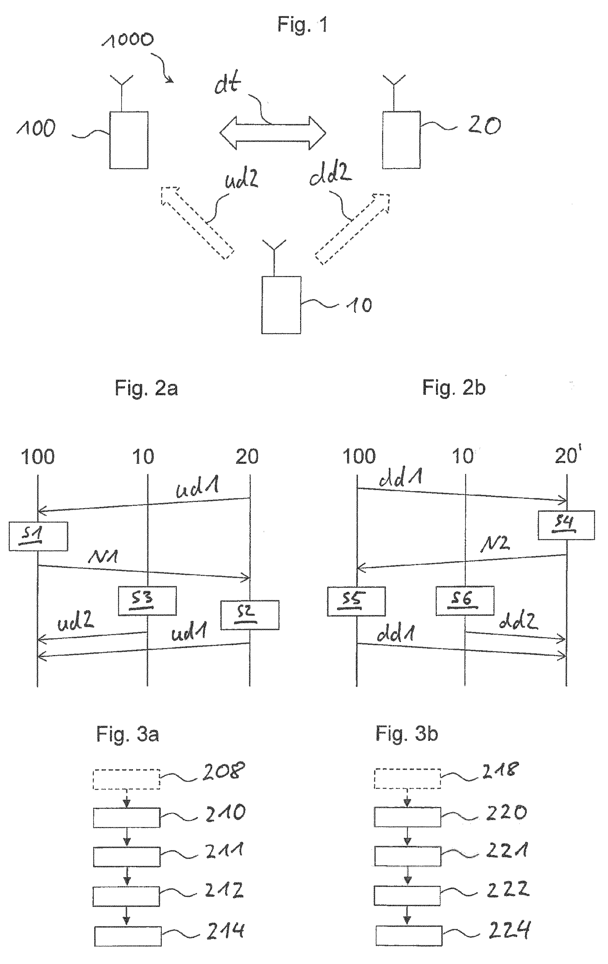

Figure 1 schematically depicts a radio communications system 1000 with a device 10 according to an embodiment. The communications system 1000 further comprises a further device 20 and a base station 100 serving said devices 10, 20 in a per se known manner. Although the principle according to the embodiments is not limited to cellular communications systems, for the further exemplary description it is assumed that the wireless communications system 1000 is a cellular communications system such as e.g. defined by the LTE or LTE-A standard. Insofar, for the further description, it is assumed that the base station 100 and the devices 10, 20 are compatible with the LTE or LTE-A standard, the devices 10, 20 e.g. representing terminals 10, 20 of the system 1000. Correspondingly, the base station 100 may exchange data with the further device 20 by means of downlink and/or uplink data transmissions dt.

In contrast to the base station 100 and the further device 20, which, according to some embodiments, may be conventional LTE- or LTE-A compatible devices, the device 10, according to an embodiment, is enhanced regarding its functionality with respect to the current LTE- or LTE-A standards to enable supporting the data transmissions dt between the base station 100 and the further device 20.

According to a first aspect, the device 10 is configurable or configured to perform the following steps, which are also illustrated in the flow chart of Fig. 3a: receive 210 first uplink transmission data ud1 transmitted in an uplink direction from the further device 20 towards the base station 100 of said communications network 1000, store 211 at least part of said received first uplink transmission data ud1 or a representation thereof, monitor 212 whether the base station 100 transmits a NACK signal N1 towards said further device 20, said NACK signal N1 indicating that the base station 100 did not successfully receive (and/or decode) said first uplink transmission data ud1, and, if the base station 100 transmits a NACK signal N1 towards said further device 20, transmit 214 second uplink transmission data ud2, which at least partially characterizes said first uplink transmission data ud1 and which is generated depending on said stored data (as obtained in step 211), towards the base station 100. This way, the device 10 may support the further device with its uplink data transmission towards the base station 100. Especially if the radio channel between the device 10 and the base station 100 is better than the radio channel between the further device 20 and the base station 100, the supporting transmission by the device 10 may enable to provide the base station with uplink data that can promptly correctly be received and/or decoded thus not requiring further NACK signals and retransmissions by the further device 20.

In the context of the present application, the expression "configurable" defines that the device 10 may include at least one operating mode in which the device 10 is acting according to at least one aspect of the embodiments, e.g. acting as a supporting device in accordance with e.g. Fig. 3a. I.e., according to some embodiments, the device 10 may also comprise further operating mode(s) wherein no supporting device functionality in the sense of the embodiments is provided.

As an example, according to an embodiment, the device 10 may be provided with a first operating mode in which it acts as a conventional LTE-compatible terminal, and with a second operating mode which implements aspects according to the embodiments, cf. e.g. Fig. 3a, e.g. acting as a supporting terminal, wherein local or remote configuration may control whether the device 10 assumes its first or second operation mode. Presently, the base station 100 or other network equipment (not depicted) of system 1000 may configure the device 10 (and/or further devices) to assume a specific operating mode enabling the functionality of e.g. Fig. 3a.

Fig. 2a depicts a communication diagram of the afore-explained scenario. In a first step, the further (conventional) device 20 transmits first uplink transmission data ud1 towards the base station 100. Upon receipt of said first uplink transmission data ud1, the base station 100 in step S1 determines whether said received data ud1 has successfully been received (e.g., if said received data ud1 can properly be decoded without errors). If not, e.g. if said received data ud1 cannot be successfully decoded, the base station 100 transmits a NACK signal N1 towards the further device 20 indicating that the base station 100 did not successfully receive (and/or decode) said first uplink transmission data ud1. Upon receiving the NACK signal N1 in step S2, the further device 20 initiates a re-transmission of the first uplink transmission data ud1 towards the base station 100. The NACK signaling and re-transmission of the first uplink transmission data ud1 may e.g. form part of a conventional H-ARQ process as known from the LTE standard. However, in addition to the conventional H-ARQ procedure, the device 10 according to the embodiments also receives (cf. step 210 of Fig. 3a) said first uplink transmission data ud1, at least temporarily stores at least a part of said received first uplink transmission data ud1 (cf. step 211 of Fig. 3a) or a representation thereof, and upon detecting (cf. step S3 of Fig. 2a) the NACK signal N1 being sent by the base station, the device 10 transmits second uplink transmission data ud2 towards the base station thus supporting the conventional H-ARQ process and reducing the number of retransmissions required for successful receipt/decoding at the base station 100. The transmission of said second uplink transmission data ud2 is also indicated in Fig. 1 by means of a dashed block arrow.

According to an embodiment, said second uplink transmission data ud2 is generated depending on the stored data (stored in step 211) and may be basically (or strictly) identical with the first uplink data ud1 transmitted from the further device 20 towards the base station 100. In this case, the transmission of the second uplink transmission data ud2 from the device 10 towards the base station 100 represents a true re-transmission. According to further embodiments, said second uplink transmission data ud2 may also comprise parts of said first uplink transmission data ud1 and/or may comprise data derived from said first uplink transmission data ud1, e.g. portions of said first uplink transmission data ud1 together with an increased amount of redundancy.

According to a further embodiment, the device 10 (Fig. 1) is configurable or configured to use for the transmission of the second uplink transmission data ud2 towards the base station 100 the same transmission resources (presently time and frequency resources of the LTE system 1000) as used by the further device 20 for a re-transmission S2 (Fig. 2a) of said first uplink transmission data ud1 and/or a transmission of third uplink transmission data which depend on said first uplink transmission data. I.e., the further device 20 may perform a conventional retransmission in step S2, retransmitting the first uplink data ud1 to the base station 100, or may - instead - transmit third uplink transmission data in step S2 which may comprise a portion of said first uplink transmission data ud1 and additional redundancy, as already mentioned above. For these transmissions, specific transmission resources are used by the further device, which are e.g. controlled by the base station 100 or by common knowledge of base station 100 and the further device 20, e.g. due to standardization. These specific transmission resources may beneficially also be used by the device 10 to transmit its second uplink transmission data ud2, whereby an over-the-air-combining of the retransmitted signals (retransmitted first uplink transmission data ud1 or third uplink transmission data from the further device 20 and second uplink transmission data ud2 of the device 10) is achieved, which saves transmissions resources and further contributes to reduced latency.

According to an embodiment, the transmission resources may e.g. comprise time and frequency resources, e.g. physical resource blocks, PRBs, as known from the LTE standard, cf. Fig. 5.2.1-1 on page 16 of 3GPP TS 36.211 V12.6.0. According to further embodiments, the transmission resources may also comprise code resources and the like.

According to further embodiments, it is also possible that the device 10 uses different (time and/or frequency and/or code and/or other) transmission resources for transmitting the second uplink data ud2 than the further device 20 for re-transmitting the first uplink transmission data ud1

The embodiments explained above with reference to Fig. 2a, 3a refer to a supporting role of the device 10 in terms of uplink transmissions ud1 of the further device 20.

According to a further embodiment, the device 10 may also assume a supporting role in terms of downlink transmissions from the base station 100 towards a further device 20', cf.

Fig. 2b, 3b. Note that the further device 20' may be identical to or different from the further device 20 as disclosed above with reference to Fig. 2a.

For this purpose, the device 10 is configurable or configured to perform the following steps: receive 220 (Fig. 3b) first downlink transmission data dd1 (Fig. 2b) transmitted in a downlink direction from the base station 100 towards said further device 20', store 221 (Fig. 3b) at least part of said received first downlink transmission data dd1 or a representation thereof, monitor 222 (Fig. 3b) whether the further device 20' transmits a NACK signal N2 (Fig. 2b) towards said base station, said NACK signal N2 indicating that the further device 20' did not successfully receive said first downlink transmission data dd1, and, if the further device 20' transmits a NACK signal N2 towards said base station 100, transmit 224 (Fig. 3b) second downlink transmission data dd2 (Fig. 2b), which at least partially characterize said first downlink transmission data dd1 and is generated depending on the stored data (as obtained in step 221), towards the further device 20'. While the embodiments explained above with reference to Fig. 2a, 3a advantageously enable supporting uplink transmissions from a further device 20 towards the base station 100, the present embodiment of Fig. 2b, 3b advantageously enables supporting downlink transmissions from a base station 100 towards the further device 20' by means of device 10 (Fig. 1). The transmission of said second downlink transmission data dd2 is also indicated in Fig. 1 by means of a dashed block arrow.

The processing steps S4, S5, S6 of Fig. 2b are similar to the steps S1, S2, S3 (although steps S4, S5 are now performed by the device 20' (S4) and the base station 100 (S5) due to the considered downlink scenario) and not explained in further detail for the sake of simplicity.

However, the steps S4, S5 and signal N2 may also form part of a conventional H-ARQ mechanism.

According to a further embodiment, the device 10 is configurable or configured to receive 208 (Fig. 3a) from said base station first control information characterizing at least one of the following: a) transmission resources related to data transmissions between the further device 20, 20' and the base station 100, b) transmission resources related to data transmissions between the device 10 and the base station 100, c) instructions for the device 10 to perform the method steps according to the embodiments, e.g. steps 220, 212, 214 of Fig. 3a and/or steps 220, 222, 224 of Fig. 3b. Hence, the device 10 may dynamically, i.e. during an active operating state, be notified by the base station 100 of the transmission resources relevant to its supporting role in the communications system 1000 (Fig. 1). According to a further embodiment, a similar receiving step 218 may be provided for the downlink transmission scenario exemplified by Fig. 3b and 2b.

According to an embodiment, the first control information may characterize at least transmission resources related to data transmissions between the further device 20, 20' and the base station 100, e.g. a) for a transmission of said first uplink transmission data ud1 from the further device 20 towards the base station 100 and/or b) for a transmission of said NACK signal N1 from said base station 100 towards said further device 20 and/or c) for a re-transmission of said first uplink transmission data ud1 from the further device 20 towards the base station 100 and/or d) for a transmission of third uplink transmission data, which depend on said first uplink transmission data, from the further device towards the base station. This serves to enable the device 10 to e.g. properly receive the first uplink transmission data ud1, and/or to properly monitor the occurrence of said NACK signal N1, and/or to use for its transmission of the second uplink transmission data ud2 the same (or similar) resources as the further device 20 for its re-transmission of the first uplink transmission data ud1 Likewise, for the downlink scenario (Fig. 2b, 3b), the control information may comprise similar information (e.g., transmission resources used by the further device 20' for transmitting the NACK signal N2, and/or transmission resources used by the base station 100 for transmitting the signal dd1 or retransmissions of signal dd1 to the further device 20').

According to a further embodiment, the first control information may characterize at least transmission resources related to data transmissions between the device 10 and the base station 100, e.g. for a transmission of said second uplink transmission data ud2 towards the base station 100.

According to a further embodiment, the first control information may characterize at least instructions for the device 10 to perform single method steps and/or a complete procedure according to the embodiments. According to a variant, the first control information may also be used by a base station 100 to instruct a specific device 10 to perform the procedure according to the embodiments, i.e. to act as a "supporting terminal" or "supporting mobile station". Evidently, it is possible that a base station 100, according to an embodiment, may instruct a specific device 10 to act as a "supporting terminal" or "supporting mobile station" only for an uplink data transmission direction (scenario exemplified by Fig. 2a, 3a) or only for a downlink data transmission direction (scenario exemplified by Fig. 2b, 3b), or for both uplink and downlink data transmission directions.

According to an embodiment, the data (Fig. 2a: ud1; Fig. 2b: dd1) received by the device 10 may be stored temporarily and may e.g. be deleted after a certain criterion is fulfilled. For example, when the device 10 receives said first uplink transmission data ud1 (Fig. 2a) transmitted in an uplink direction from the further device 20 towards the base station 100 of said communications network, a timer may be started, and after expiry of said timer, said stored data may be deleted. According to a preferred embodiment, said stored data is only deleted if said timer is expired and if - in addition to said expired timer - no NACK signal N1 (Fig. 2a) has been received by the device 10 in the time interval between start and expiry of said timer. Thus, advantageously, memory resources of the device 10 may be saved and unused data can be deleted again.

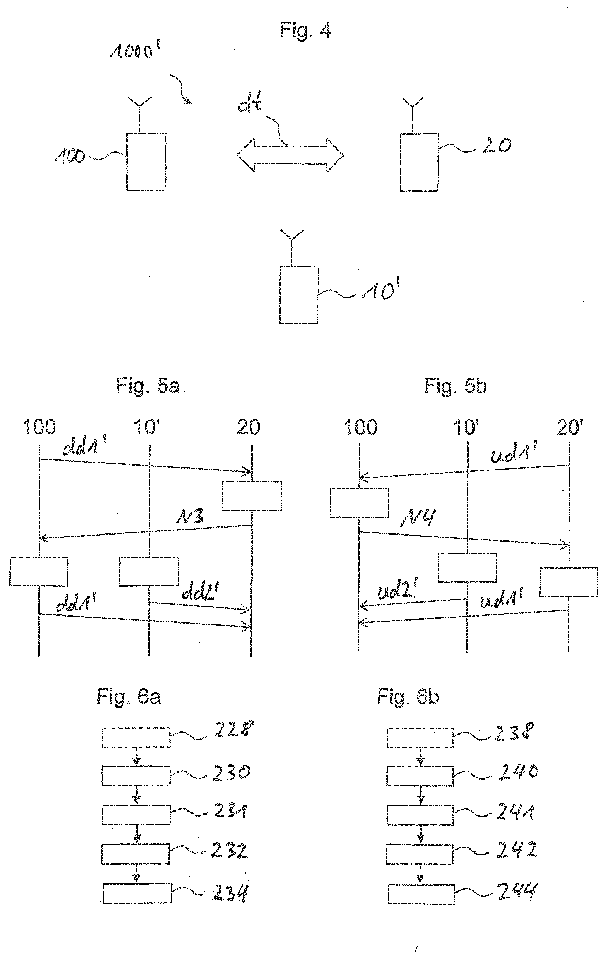

Figure 4 schematically depicts a wireless (i.e., radio) communications system 1000' with a device 10' according to a further embodiment. Although the principle according to the embodiments is not limited to cellular communications systems, for the further exemplary description it is assumed that the wireless communications system 1000', too, is a cellular communications system such as e.g. defined by the LTE or LTE-A standard, similar to system 1000 of Fig. 1. Insofar, for the further description, it is also assumed that the base station 100 and the devices 10', 20, which are e.g. terminals, are compatible with the LTE or LTE-A standard. Correspondingly, the base station 100 may exchange data with the further device 20 by means of downlink and/or uplink data transmissions dt.

In contrast to the base station 100 and the further device 20, which, according to some embodiments, may be conventional LTE- or LTE-A compatible devices, the device 10', according to an embodiment, is enhanced regarding its functionality with respect to the current LTE- or LTE-A standards to enable supporting the data transmissions dt between the base station 100 and the further device 20. Presently, according to an embodiment, the device 10' is configurable or configured to perform the following steps: receive 230 (Fig. 6a) first downlink transmission data dd1' (Fig. 5a) transmitted in a downlink direction from the base station 100 (Fig. 4) towards the further device 20 (Fig. 4), store 231 (Fig. 6a) at least part of said received first downlink transmission data dd1' or a representation thereof, monitor 232 (Fig. 6a) whether the further device 20 transmits a NACK signal N3 (Fig. 5a) towards said base station 100, said NACK signal N3 indicating that the further device 20 did not successfully receive (and/or decode) said first downlink transmission data dd1', and, if the further device 20 transmits a NACK signal N3 towards said base station 100, transmit 234 (Fig. 6a) second downlink transmission data dd2' (Fig. 5a), which at least partially characterize said first downlink transmission data dd1' and is generated depending on the stored data (as obtained in step 231), towards the further device 20. This advantageously enables to provide the further device 20 with said second downlink transmission data dd2' from a further source, i.e. the device 10'. As the device 10' may have better channel conditions for its data transmissions towards the further device 20, particularly for transmitting the second downlink transmission data dd2' towards the further device 20, than the base station, an efficient "re-transmission" may be effected, where the device 10' contributes to said "re-transmission". In view of this, the device 10' may also be denoted as a "supporting terminal", as compared to the further device 20, because the device 10' supports the base station 100 in transmitting data dd1' towards the further device 20.

According to a further embodiment, said device 10' is configurable or configured to use for the transmission 234 (Fig. 6a) of the second downlink transmission data dd2' to the further device 20 the same transmission resources as used by the base station 100 for a re-transmission of said first downlink transmission data dd1' and/or a transmission of third downlink transmission data which depend on said first downlink transmission data dd1', whereby an over-the-air-combining of the signals dd2', dd1' is attained which saves transmission resources and reduces latency.

According to a further embodiment, the device 10' is configurable or configured to receive 228 (Fig. 6a) from said base station 100 first control information characterizing at least one of the following: a) transmission resources related to data transmissions dt (Fig. 4) between the base station 100 and the further device 20, b) transmission resources related to data transmissions between the device 10' and the further device 20, c) instructions for the device 10' to perform method steps according to the embodiments.

So far, for the embodiments based on Fig. 4, a supporting functionality of the device 10' in a downlink direction has been explained. However, according to a further embodiment, the device 10' is configured to perform the following steps, which are related to a supporting functionality of the device 10' in an uplink direction and which are also illustrated in the flow chart of Fig. 6b and in Fig. 5b: receive 240 first uplink transmission data ud1' transmitted in an uplink direction from the further device 20' (note that the further device 20' may be identical to or different from the further device 20 as disclosed above with reference to Fig. 4) towards the base station 100 of said communications network 1000', store 241 at least part of said received first uplink transmission data ud1' or a representation thereof, monitor 242 whether the base station 100 transmits a NACK signal N4 towards said further device 20', said NACK signal N4 indicating that the base station 100 did not successfully receive (and/or decode) said first uplink transmission data ud1', and, if the base station 100 transmits a NACK signal N4 towards said further device 20', transmit 244 second uplink transmission data ud2', which at least partially characterize said first uplink transmission data ud1', towards the base station 100. This way, the device 10' may support the further device 20' with its uplink data transmission towards the base station 100.

According to a further embodiment, the device 10' is configurable or configured to receive 238 (Fig. 6b) from said base station 100 first control information characterizing at least one of the following: a) transmission resources related to data transmissions dt (Fig. 4) between the base station 100 and the further device 20, b) transmission resources related to data transmissions between the device 10' and the further device 20, c) instructions for the device 10' to perform method steps according to the embodiments, and/or d) transmission resources related to data transmissions between the device 10' and the base station 100.

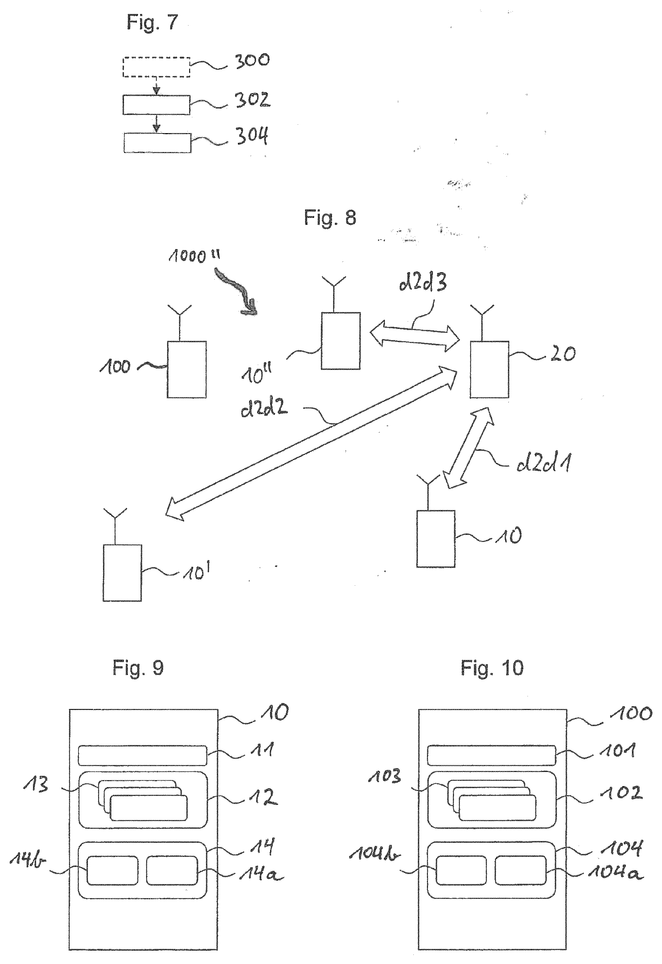

Figure 7 schematically depicts a simplified flow-chart of a method of operating network equipment, e.g. a base station 100, according to an embodiment.

In step 302, said base station 100 (cf. Fig. 1, Fig. 4) generates control information for instructing a device 10, 10' of a communications network 1000, 1000' to perform the method steps 210, 211, 212, 214 according to Fig. 3a and/or to perform the method steps 230, 231, 232, 234 according to Fig. 6a.

In step 304, the network equipment or base station 100 transmits towards the device 10, 10' first control information characterizing at least one of the following:
a) transmission resources related to data transmissions dt between the further device 20 and the base station 100 (for uplink and/or downlink transmissions), b) transmission resources related to data transmissions between the device 10, 10' and the base station 100.

Thus, the device 10, 10' may be notified dynamically by the network equipment or base station 100 which transmission resources to use for said steps of receiving 210, 220, 230, 240 and/or monitoring 212, 222, 232, 242 and/or transmitting 214, 224, 234, 244.

Further, in an optional step 300, which may precede step 302, the network equipment or base station 100 determines one or more candidate devices or terminals 10, 10' of said communications network 1000" (Fig. 8), which may preferably be selected as supporting terminals for supporting the base station 100 and/or at least one further device 20, 20' of said communications network 1000" with data transmissions to at least one further device 20, 20' and/or the base station 100, respectively. Advantageously, said step 300 of determining one or more candidate terminals is performed depending on at least one of the following criteria: a) a device-to-device, D2D, link quality characterizing one or more parameters of a direct communications channel d2d1, d2d2, d2d3 between a device 10, 10', 10" and a further device 20, b) a status of an electric energy supply, particularly a battery status, of said device 10, 10', 10", c) processing capabilities of a processing unit 11 (Fig. 9) of said device 10 (and/or of device 10', 10"), d) terminal-specific control information indicating that said device may not operate as a supporting terminal.

According to a further embodiment, the base station 100 is configured to select at least one candidate device 10, 10', 10" as a supporting device for supporting the base station 100 and/or at least one further device 20, 20' of said communications network 1000, 1000', 1000" with data transmissions towards at least one further device 20; 20' and/or the base station 100, respectively.

Fig. 8 schematically depicts a wireless communications system 1000" according to a further embodiment. A base station 100 performs the method according to Fig. 7 and determines in step 300 one or more candidate terminals 10, 10', 10" of said communications network 1000", which may be employed as supporting terminals in accordance with the principle according to the embodiments. For example, the terminals 10, 10', 10" may be determined as candidate terminals, wherein terminals 10, 10" are selected as supporting terminals due to their comparatively good D2D channels d2d1, d2d3 to/from the further device 20.

Figure 9 schematically depicts a block diagram of a device 10, e.g. a terminal, according to an embodiment. The device 10 comprises a processing unit 11 such as a digital signal processor (DSP) or general purpose microprocessor or correspondingly configured field programmable gate array (FPGA) or an ASIC (application specific integrated circuit) or the like. The device 10 further comprises a memory unit 12 comprising RAM (random access memory) and/or ROM (read only memory) and/or other forms of volatile and/or non-volatile memory devices. In one or more memory devices of the memory unit 12, a computer program 13 for executing the steps according to one or more of the present embodiments may be provided. The device 10 further comprises a transceiver 14 having a transmitter 14a and a receiver 14b for data transmission with the base station 100 and/or further terminals 20 (Fig. 1), e.g. in form of D2D communications.

Figure 10 schematically depicts a block diagram of a base station 100 according to an embodiment. The base station 100 comprises a processing unit 101 such as a digital signal processor (DSP) or general purpose microprocessor or correspondingly configured FPGA or an ASIC or the like. The base station 100 further comprises a memory unit 102 comprising RAM and/or ROM and/or other forms of volatile and/or non-volatile memory devices. In one or more memory devices of the memory unit 102, a computer program 103 for executing the steps according to one or more of the present embodiments may be provided. The base station 100 further comprises a transceiver 104 having a transmitter 104a and a receiver 104b for data transmission with the device 10 and/or further terminals 20 (Fig. 1).

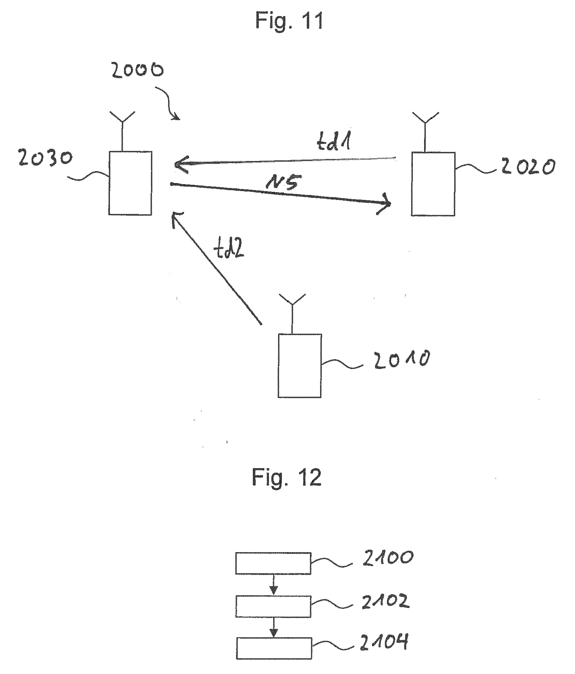

Figure 11 schematically depicts a wireless communications system 2000 with first, second and third communication devices 2010, 2020, 2030 according to an embodiment. In difference to the above explained embodiments, the wireless communications system 2000 is no cellular communications system, but e.g. a wireless peer-to-peer network. Said first communication device 2010 is configurable or configured to perform the following steps, also cf. the flow-chart of Fig. 12: receive 2100 first transmission data td1 transmitted from the second communication device 2020 to the third communication device 2030, preferably store at least part of said first transmission data or a representation thereof, monitor 2102 whether the third communication device 2030 transmits a NACK signal N5 to said second communications device 2020, said NACK signal N5 indicating that the third communication device 2030 did not successfully receive said first transmission data td1, and, if the third communication device 2030 transmits a NACK signal N5 to said second communication device 2020, transmit 2104 second transmission data td2, which at least partially characterize said first transmission data td1 and which is preferably generated depending on said stored data, to the third communication device 2030, thus supporting the device 2020 to remedy a non-successful transmission td1.

Generally, the principle according to the embodiments is applicable to the following technological fields and systems: GSM (Global System for Mobile Communications), GPRS (General Packet Radio Service), EDGE (Enhanced Data Rates for GSM Evolution), UMTS (Universal Mobile Telecommunications System), HSPA (High Speed Packet Access), LTE , LTE Advanced, 5G, WiFi (wireless networks based on the IEEE (Institute of Electrical and Electronics Engineers)-802.11-standards family), WLAN (Wireless Local Area Network), IoT (Internet of Things), "Industry 4.0" (German: "Irldustrie 4.0"), autonomous driving, D2D (device-to-device) communication, sensor networks.

The principle according to the embodiments can be used in any field of wireless communications, where low latency and increased reliability is required, thus being specifically suited for providing systems supporting mission critical communications, MCC.

Advantageously, by adopting the principle according to the embodiments, it is not required to provide strong overdimensioning of radio resources, e.g. using a very low modulation and coding scheme with a large amount of redundancy, as is done with conventional systems to attain high reliability and low latency. Hence, by using the principle according to the embodiments, waste of spectral efficiency can be avoided.

Finally, in contrast to relay-based approaches, which try to attain high reliability and low latency by employing multi-hop transmissions over one or more mobile stations, the principle according to the embodiments requires a comparatively smaller amount of extra (transmission) resources to attain the advantages explained above.

In the following, further advantageous embodiments are presented.

According to a particularly preferred embodiment, the above explained principle may advantageously be applied to a cellular network 1000" (Fig. 8) with (at least some) device-to-device communication (D2D) capable devices such as the terminals 10, 10', 10", 20.

According to an embodiment, a procedure in an uplink direction may be as follows: A mobile station (MS) of interest, namely the further device 20 (Fig. 8) with e.g. mission critical communication (MCC) services gets assigned one or more supporting MS, i.e. terminals 10, 10''.

According to an embodiment, at least one of those supporting terminals 10, 10" is chosen such, preferably by the base station, BS, 100, that it has a good direct D2D link d2d1, d2d3 to the further device 20 and, if possible, a better link to the BS 100 than the further device 20.

According to an embodiment, when the further device 20 transmits in the uplink (e.g., via a scheduled access) the BS 100 may configure the supporting terminals 10, 10" that they listen to the uplink transmission of the further device (cf. e.g. the uplink data transmission ud1 of Fig. 2a) and preferably at least temporarily store data of the uplink transmission of the further device or a representation thereof.

According to an embodiment, in case the BS 100 successfully receives (and/or decodes) the transmission(s) of the further device 20, it may send an ACK to the further device as per se known in the art.

According to a further embodiment, in case the BS 100 is not able to decode the signal ud1 from the further device 20, it sends a NACK N1 (Fig. 2a) to the further device 20. Optionally, there may be additional information attached to this NACK N1 by the base station 100. The additional information may be an indicator for the candidate supporting devices whether they should assist the re-transmission or not, as well as the indicator whether retransmission should be done by the supporting device only excluding the original transmitting device. Furthermore in case of desired assistance, additional information, regarding type of redundancy or the indication of potentially separate multiple access resources may be send.

According to a further embodiment, now a H-ARQ retransmission may be performed by the further device 20 and by optionally one or more of the supporting terminals 10, 10" (Fig. 8). Preferably, in order to save radio resources, all retransmissions may occur in the same time-frequency-code radio resource, e.g. exploiting an over-the-air-combining of the retransmitted signals.

As the BS 100 now receives such air-combined signal from said multiple sources 10, 10", 20, where the supporting terminals 10, 10'' have usually even better radio link qualities to the base station 100, the reliability is greatly enhanced, also by the additional transmit diversity of the supporting distributed antennas of different devices 10, 10'', 20. As a consequence, in almost all cases it is expected that a single retransmission according to the principle of the embodiments is sufficient to ensure very high reliability and improved coverage. Thus, a well-defined low latency can be achieved. Those effects hence achieve the needs of MCC with enhanced reliability, enhanced coverage and low latency.

According to a further embodiment, for the downlink direction, the following procedure may be employed:
According to an embodiment, the downlink scenario may be considered as basically vice versa with respect to the afore-explained uplink procedure: The BS 100 transmits data dd1 (cf. e.g. Fig. 2b) in the downlink to the further device 20'. The supporting devices or terminals 10, 10" may buffer this data dd1 and may listen to the ACK/NACK N2 of the further terminal's uplink transmission via a D2D link between the further device 20 and the supporting terminals 10, 10". In case the further device 20 sends a NACK N2, the retransmission may occur via the supporting terminals 10, 10" and/or the BS 100.

According to a further embodiment, the downlink signals may as well be broadcast/multicast signals.

In the following, further advantageous embodiments related to a selection of supporting terminals 10, 10' or supporting devices are presented.

According to an embodiment, a cellular communications system with a D2D option (i.e., wherein at least some devices such as terminals are capable of D2D communication) has means for proximity detection between such devices/terminals. According to an embodiment, one possible approach is the usage of beaconing signals to detect and measure the quality of links d2d1, d2d2, d2d3 (Fig. 8) to potential D2D communication partners. According to an embodiment, further options are the usage of localization methods like GPS (global positioning system) or triangulation to infer on suitable D2D link quality either by proximity or with the additional assistance of data bases which include the properties of a shadowing environment.

According to a further embodiment, supporting candidate terminals, which form a candidate set, may be terminals which have a good D2D link quality, i.e. are close enough to a potential communications partner (further device or base station), preferably without disfavorable shadowing conditions. According to an embodiment, from this candidate set the BS 100 considers the link quality of the respective candidate to the BS 100. All candidates with link qualities which are clearly worse (e.g. by x many dB in terms of received signal strength) than the link from the further device 20 to the BS 100 are excluded from the candidate set. For example, device 10' of Fig. 8 may be excluded from the candidate set as it is arranged remote from the base station 100 as compared with the further candidate terminals 10, 10".

As already mentioned above, according to a further embodiment, additional criteria may be used to further exclude devices from the candidate set, e.g. if they have a poor battery status, if they have not enough processing power, if its user has configured the device not to be used as a supporting device etc.

According to a further embodiment, one or more terminals 10, 10' are picked as supporting devices or supporting terminals. The selection e.g. may be based on a utility score which may be a weighted combination of two or more of the above mentioned criteria, determined and selected by the BS 100.

According to a further embodiment, the BS 100 may now inform the supporting terminals on their role and optionally provides information to the supporting terminals which enables that the supporting terminals can listen to the control information intended for the further device 20, or at the least a subset which is required to listen to a transmission of the further device 20, e.g. a pointer to the resources being used for the transmission from/to the further device 20 and the format of the data (e.g. modulation and coding scheme) in case of scheduled transmissions or the respective information required to detect the data in case of contention-based transmission.

According to a further embodiment, retransmissions are only performed by the supporting terminal(s) 10, 10', and not by the further device 20 (uplink case) or the BS 100 (downlink case).

The embodiments given so far advantageously improve MCC services, as latency is decreased and reliability is increased. In the following, further advantageous embodiments related to Broad- and Multicast are presented.

An extension of the above-mentioned embodiments to further improve broad- and multicast services (BMS) is described below: With BMS the base station 100 (Fig. 4, 5a) is to transmit data to multiple mobile stations 10, 20 concurrently. Typically, to have the transmission being received by all mobile stations, comparatively inefficient modulation and coding schemes have to be chosen. Otherwise, a retransmission technique would have to be applied, being highly inefficient as precious resources would have to be spend again.

In view of this, according to an embodiment, a (or optionally, any) mobile station 20 (Fig. 5a) not having properly received a BMS transmission of the base station 100 may send a NACK signal N3 via a respective control channel, preferably via a sidelink (also cf. below for sidelink transmissions). At least one, preferably each, "supporting" mobile station 10' (Fig. 5a) being part of this one-to-many relation and having received the base station's BMS transmission may listen to this control channel and would thus be aware of device(s) having not received the BMS transmission. Then, the "supporting" mobile station 10' may transmit on respective predefined resources the packet or packets of said BMS transmission accordingly using a D2D transmission dd2'. Optionally, according to a further embodiment, the D2D transmission dd2' may happen in an overlay/underlay mode, so in superposition with other traffic: e.g. the BS 100 may use power control and transmit to nearby other terminals on the same-time frequency resource, while the retransmissions according to the embodiment are carried out via the D2D link, spatially reusing those radio resources. This D2D retransmission can be used by the terminals 20 not having received the original packet successfully via the regular BMS communication.

In the following, a further embodiment is disclosed, wherein an LTE communications network 1000 (Fig. 1) and an uplink transmission scenario is considered. In this embodiment, it is assumed that both the device 10 and the further device 20 are LTE compatible terminals and are connected to the base station 100, which is also denoted as eNodeB or eNB. This may e.g. be reflected by the fact that both terminals 10, 20 are in the "RRC_CONNECTED" state as defined in section 7.2 of reference [2] (3GPP TS 36.300 V12.7.0) defined above. Correspondingly, according to an embodiment, the base station 100 may check whether the device 10 and the further device 20 are in the "RRC_CONNECTED" state.

After this, the base station 100 may determine whether the further device 20 requires the supporting device functionality as provided by the device 10 according to the embodiments. This may e.g. be the case if the further device 20 experiences a poor channel quality and yet has to provide MCC services. Hence, according to an embodiment, the base station 100 may evaluate at least one of the following two conditions:
1) Channel quality of the further device 20: The eNodeB 100 monitors the channel quality (CQI) via the UL sounding channel, cf. reference [4], section 8.2., whether it is below a certain threshold. As an alternative option: DL CQIs obtained from UL PUCCH as defined in reference [1] may be evaluated.
2) Service need for mission critical communication, MCC:
   In an extension of the existing LTE standard, a new quality of service class indicator (QCI) for MCC may be defined for specifying the respective low latency,
   low tolerated packet error rates and high priority of the MCC service. For this, in reference [5], Table 6.1.7 has to be expanded accordingly. This new QCI for MCC is used when an EPS (Evolved Packet switched System) bearer is set up.

The following table represents an excerpt from Table 6.1.7 of reference [5], wherein the leftmost column denoted as "Row number" has been added for the sake of clarity. Rows 1, 2, 3 of the following table are part of Table 6.1.7 of reference [5], thus defining potential QCIs relevant to MCC.

| **Row number** | **QCI** | **Resource Type** | **Priority Level** | **Packet Delay Budget** | **Packet Error Loss Rate (NOTE 2)** | **Example Services** |
|---|---|---|---|---|---|---|
| 1 | 65 (NOTE 3, NOTE 9, NOTE 12 ) | | 0.7 | 75ms (NOTE 7, NOTE 8) | 10⁻² | Mission Critical user plane Push To Talk voice (e.g., MCPTT) |
| 2 | 69 (NOTE 3, NOTE 9, NOTE 12 ) | | 0.5 | 60 ms (NOTE 7, NOTE 8) | 10⁻⁶ | Mission Critical delay sensitive signalling (e.g., MC-PTT signalling) |
| 3 | 70 (NOTE 4, NOTE 12 ) | | 5.5 | 200 ms (NOTE 7, NOTE 10) | 10⁻⁶ | Mission Critical Data (e.g. example services are the same as QCI 6/8/9) |
| 4 | To be defined | | To be defined | To be defined, e.g. 10 ms or below | To be defined, e.g. 10⁻⁷ or below | MCC services as provided based on the principle according to the embodiments |
| | | | | | | |

However, as the listed packet delay budget in existing LTE QCIs for MCC (cf. rows 1, 2, 3 of the preceding table) may not be sufficient for the scope of e.g. 5G ultra-low-latency services, cf. reference [6], according to an embodiment, it is proposed to reduce said packet delay budget to e.g. 10 ms or below. The same holds for the listed packet error loss rate for ultra-high reliability services, which, according to a further embodiment, is proposed to be reduced to 10⁻⁷ or even below. In other words, to satisfy MCC related aspects of 5G systems, one or more additional QCI entries as exemplarily provided above in row number 4 may be defined. The so defined additional QCI entry of row number 4 may e.g. be used by the system 1000 according to the embodiments to identify MCC service needs that may be addressed by the principle of the supporting device according to the embodiments.

If either one or both of the above mentioned conditions (1): poor channel quality, 2): service need for MCC) are met, according to a further embodiment, the base station may identify suitable supporting terminals ("UEs"). According to an embodiment, in the RRC_CONNECTED state (reference [2], section 7.2) sidelink communication transmission and reception, as well as sidelink discovery announcement and monitoring is possible, due to the LTE proximity based services (ProSe) D2D functionality added in Rel. 12, using the PC5 interface. Via sidelink discovery announcement and monitoring of the further device 20 (Fig. 1), the eNodeB 100 may obtain information about suitable candidate terminals for the supporting link. According to an embodiment, candidate terminals may e.g. be those terminals that are discovered as suitable sidelink communication partners, and may be managed e.g. in form of a candidate device list.

According to a further embodiment, after obtaining information about suitable candidate terminals, the eNodeB 100 may identify one or more terminals of the candidate device list to be selected for a supporting role in the sense of the embodiments.

According to a further embodiment, this can e.g. be done by picking the device of the candidate device list with the highest CQI, based on the UL sounding channel. Alternatively, DL (downlink) CQIs obtained from UL PUCCH may be considered for selecting a suitable terminal. As an example, the device 10 of Fig. 1 may represent such selected candidate terminal.

According to a further embodiment, a new RRC message may be added to the LTE standard disclosed in [3], section 6.2. The new RRC message may be employed to instruct a device 10 that it should take over a supporting role, i.e. carry out the method according to the embodiments as exemplarily disclosed above with reference to Fig. 2a, 2b, 3a, 3b, 5a, 5b, 6a, 6b. This new RRC message, which may e.g. be used within steps 302 and/or 304 of Fig. 7, may also be used for providing said first control information as also exemplarily disclosed above from the base station 100 (Fig. 1) to the device 10. According to a further embodiment, said first control information may comprise information enabling the device 10 to monitor the PDCCH (Physical Downlink Control Channel) and PHICH (Physical Hybrid ARQ Indicator Channel), cf. reference [1], of the further device 20. According to a further embodiment, said first control information may also comprise information on an appropriate HARQ configuration for the device 10.

The following table shows paragraph depicts an excerpt of reference [3], section 6.2.2, which comprises definitions of RRC messages, particularly of an RRCConnectionReconfiguration message:
*** start of excerpt of reference [3], section 6.2.2 ***

### - RRCConnectionReconfiguration

The *RRCConnectionReconfiguration* message is the command to modify an RRC connection. It may convey information for measurement configuration, mobility control, radio resource configuration (including RBs, MAC main configuration and physical channel configuration) including any associated dedicated NAS information and security configuration.
Signalling radio bearer: SRB1
RLC-SAP: AM
Logical channel: DCCH
Direction: E-UTRAN to UE

| | | | |
|---|---|---|---|
| RRCConnectionReconfiguration-r8-IEs : := | SEQUENCE { | | |
| measConfig | MeasConfig | OPTIONAL, | -- |
| Need ON | | | |
| mobilityControlInfo | MobilityControlInfo | OPTIONAL, | -- |
| Cond HO | | | |
| dedicatedInfoNASList | SEQUENCE (SIZE(1..maxDRB)) OF | | |
| | DedicatedInfoNAS | OPTIONAL, | -- |
| Cond nonHO | | | |
| radioResourceConfigDedicated | RadioResourceConfigDedicated | OPTIONAL, | -- |
| Cond HO-toEUTRA | | | |
| securityConfigHO | SecurityConfigHO | OPTIONAL, | -- |
| Cond HO | | | |
| nonCriticalExtension | RRCConnectionReconfiguration-v890-IEs | OPTIONAL, | |
| ) | | | |

| | | | |
|---|---|---|---|
| *** end of excerpt of reference [3], section 6.2.2 *** | | | |

According to an embodiment, a newly defined RRCConnectionReconfiguration message may be added to the above depicted standard as disclosed by reference [3] and may be sent to the device 10, or any potentially supporting device 10, 10', 10", generally. According to a further embodiment, the newly defined RRCConnectionReconfiguration message may have the following new content: (1) Supporting role indicator (indicating to the device to act as a supporting terminal), and/or (2) information for monitoring PDCCH and PHICH (cf. reference [1]) of the further device 20, e.g. the C-RNTI (cell radio network temporary identity) of the further device 20. According to a further embodiment, the appropriate HARQ configuration information (NDI (new data indicator), redundancy version, HARQ process number) of the further device 20 may implicitly be obtained by decoding the DCI (downlink control information).

According to a further embodiment, the device 10 - e.g., after receiving newly defined RRCConnectionReconfiguration - may monitor the DL-PDCCH (cf. reference [1]) of the further device 20 in order to detect a grant of the further device 20 via DCI for UL (uplink) data transmission.

According to a further embodiment, once the device 10 detects that the further device 20 is scheduled, it uses its D2D communication functionality, for example via PC5 sidelink communication, in order to listen to the UL-SCH (uplink shared channel) for decoding the transport blocks of the further device 20 and for buffering them in case of errors for the link of the further device 20 to the eNodeB 100.

According to a further embodiment, after the transmission of the further device 20, device 10 may also monitor the PHICH intended for the further device 20. In case the eNodeB 100 sends a NACK N1 (Fig. 2a), the device 10 may support the retransmission of the further device 20 by sending said second uplink transmission data ud2 (Fig. 2a), e.g. a retransmission on the UL-SCH, preferably in the same uplink PRBs (physical resource blocks) in the same format as the further device 20 (thus using e.g. the same incremental redundancy version) to enable over-the-air-combining of the signals ud1, ud2 of the further device 20 and the device 10. As a result, the eNodeB 100 may thus receive a retransmitted sum signal of the further device 20 and the (supporting) device 10 with a higher probability that this first retransmission is successful, compared to the further device 20 retransmitting alone, as with conventional HARQ or other retransmitting procedures.

According to a further embodiment, more than one device 10 (e.g. terminals 10, 10', 10", cf. Fig. 8) may assist in the retransmission of a further device 20 thus increasing diversity and thus reliability of the retransmission.

In the following, a further embodiment is disclosed, wherein an LTE communications network 1000 (Fig. 1) and a downlink transmission scenario (preferably unicast) is considered.

According to an embodiment, the possible preconditions for the downlink scenario may be similar or identical to the uplink scenario explained above: (1) The further device 20 (Fig. 1) and the device 10 are in an RRC connected state, (2) the eNodeB 100 checks whether the application of the supporting principle according to the embodiments is requested or required (e.g., via evaluating a newly defined QCI as explained above), (3) the eNodeB 100 selects one or more candidate terminals 10, 10', 10" (Fig. 8), (4) the eNodeB 100 selects supporting terminal(s) 10, in the present example further denoted as "device 10".

The device 10 may now monitor the DL-PDCCH (reference [1]) of the further device 20 in order to identify the DL-PDSCH (physical downlink shared channel) resources which are intended for data transmission towards the further device 20. Once the device 10 detects that the further device 20 is scheduled, device 10 listens to the DL-PDSCH transmission dd1 (Fig. 2b) intended for the further device 20 and buffers it in case of errors for the link of the eNodeB 100 to the further device 20.

After a data transmission dd1 from the eNodeB 100 to the further device 20, the device 10 may also monitor (step S6 of Fig. 2b) PUCCH and/or PUSCH for detecting ACK/NACK responses (e.g., NACK signal N2, Fig. 2b) of the further device 20 in response to the downlink data transmission dd1.

According to an embodiment, in case the further device 20 is sending a NACK N2, a retransmission is required which may be supported / assisted by the device 10. For this purpose, as soon as the NACK N2 is received by the device 10, it may pre-compute the appropriate encoded redundancy version of the retransmission (second downlink transmission data dd2), preferably based on the information of the new RRC message (described above in the uplink embodiment) and may store it in its transmit buffer. Then device 10 may monitor the DL-PDCCH for a scheduling announcement on the retransmission.

According to an embodiment, when the retransmission occurs by the eNodeB 100, the device 10 assists by sending the same (already precomputed) HARQ retransmission in form of the second downlink transmission data dd2, preferably on the same time-frequency resource as the eNodeB 100. The signals dd1, dd2 (Fig. 2b) combine over the air and lead to a diversity and power gain, increasing the chances of the further device 20 for proper decoding.

According to a further embodiment, the device 10 may also simply not transmit the first (or the first few) OFDM symbols of the planned HARQ-retransmission dd2, which is particularly beneficial if any processing delays prevent the device 10 from starting at the same time instant with its transmission dd2 as the eNodeB 100 with its transmission dd1. In this case, forward error correction of the decoder of the further device 20 in conjunction with the direct transmission dd1 by the eNodeB 100 will still allow for increased probabilities (compared to conventional, single link) recovering the data.

In the following, a further embodiment is disclosed, wherein an LTE communications network 1000 (Fig. 1) and a downlink transmission scenario with broadcast/multicast is considered.

According to the present embodiment, it is proposed to define in reference [3], section 6.2 (or a future document version thereof) a novel RRC message (RRCConnectionReconfiguration) for Downlink broadcast sidelink assistance. According to an embodiment, it may contain information on which time-frequency resources (e.g., PRBs of certain subframes) will be used for (a) downlink broadcast NACK (in the case of broad- and multicast services (BMS), wherein the base station 100 may transmit data to multiple mobile stations 10, 20 concurrently) via sidelink, (b) sidelink retransmission of downlink broadcast data. For (b), additionally, the used format may be indicated in terms of MCS (modulation and coding scheme).

According to a further embodiment, devices such as terminals 20, 20' interested in BMS services listen to the LTE eMBMS subframes. In case the broadcast/multicast data cannot be successfully received (e.g. detected by checking CRC), said terminals 20, 20' may send a novel NACK message (a) via a sidelink PC5 interface on the resources indicated by the above described novel RRC message.

According to a further embodiment, terminals or devices who have successfully received eMBMS data may listen to the novel downlink broadcast NACK channel (a) via sidelink. In case a NACK is discovered by a device, it may send the sidelink retransmission on the newly defined resources (b) indicated by the novel RRC message discussed above.

According to a further embodiment, the decoder of a receiving device 20 now combines the information from the original eMBMS subframes with the sidelink broadcast retransmissions in order to increase the probability of a successful reception.

Advantageously, the principle according to the embodiments enables an air interface of a communications system, such as e.g. of a 5G system, to efficiently make use of retransmission strategies to support MCC and BMS services. By applying the principle according to the embodiments, resources are more efficiently used and low latency requirements are met. Instead of achieving reliability with e.g. 4 to 5 H-ARQ round trip times (RTT), a single H-ARQ RTT should be sufficient with the principle according to the embodiments due to the diversity gain from multiple D2D links and the improved path gain by proper device selection of supporting terminals. This will cut down latency by an integer multiple and reduce the amount of used radio resources as well.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

At least parts of the above described radio communications network including base stations could be implemented using network functions virtualization (NFV). NFV is a network architecture that makes use of technologies of computer virtualization. Entire network equipment like base stations or parts thereof or part of their functions can be virtualized using software building blocks that may connect, or interact, to create communication services. A virtualized network function of e.g. a base station may include at least one virtual machine running different software and processes, on top of standard high-volume servers, switches and storage, or a cloud computing infrastructure, instead of having customized hardware appliances for each network function. As such a base station function may be implemented using a computer program product embodied on a non-transitory computer readable medium (M) for performing operations, wherein the computer program product comprises instructions, that when executed by a processor (Pr), perform the operations of the specific base station function.

## Claims

1. Device (10) for a radio communications network (1000), wherein said device (10) includes at least a processor (11), a memory (12) and a transceiver (14) and is configurable to: receive (210) first uplink transmission data (ud1) transmitted in an uplink direction from a further device (20) towards a base station (100) of said communications network (1000), store (211) at least part of said received first uplink transmission data (ud1) or a representation thereof, monitor (212) whether the base station (100) transmits a NACK signal (N1) towards said further device (20), said NACK signal (N1) indicating that the base station (100) did not successfully receive said first uplink transmission data (ud1), and, if the base station (100) transmits a NACK signal (N1) towards said further device (20), transmit (214) second uplink transmission data (ud2), which at least partially characterizes said first uplink transmission data (ud1) and is generated depending on the stored data, towards the base station (100).

2. Device (10) according to claim 1, wherein said device (10) is configurable to use for the transmission (214) of the second uplink transmission data (ud2) towards the base station (100) the same transmission resources as used by the further device (20) for a retransmission of said first uplink transmission data (ud1) and/or a transmission of third uplink transmission data which depend on said first uplink transmission data (ud1).

3. Device (10) according to one of the preceding claims, wherein the device (10) is configurable to: receive (220) first downlink transmission data (dd1) transmitted in a downlink direction from the base station (100) towards a further device (20'), store (221) at least part of said received first downlink transmission data (td1) or a representation thereof, monitor (222) whether the further device (20') transmits a NACK signal (N2) towards said base station (100), said NACK signal (N2) indicating that the further device (20') did not successfully receive said first downlink transmission data (dd1), and, if the further device (20') transmits a NACK signal (N2) towards said base station (100), transmit (224) second downlink transmission data (dd2), which at least partially characterizes said first downlink transmission data (dd1) and is generated depending on the stored data, towards the further device (20').

4. Device (10) according to one of the preceding claims, wherein the device (10) is configurable to receive (208; 218) from said base station (100) first control information characterizing at least one of the following: a) transmission resources related to data transmissions (dt) between the further device (20) and the base station (100), b) transmission resources related to data transmissions between the device (10) and the base station (100), c) instructions for the device (10) to perform the method steps according to one of the preceding claims.

5. Device (10') for a radio communications network (1000'), wherein said device (10') includes at least a processor (11), a memory (12) and a transceiver (14) and is configurable to: receive (230) first downlink transmission data (dd1') transmitted in a downlink direction from the base station (100) towards a further device (20), store (231) at least part of said received first downlink transmission data (dd1') or a representation thereof, monitor (232) whether the further device (20) transmits a NACK signal (N3) towards said base station (100), said NACK signal (N3) indicating that the further device (20) did not successfully receive said first downlink transmission data (dd1'), and, if the further device (20) transmits a NACK signal (N3) towards said base station (100), transmit (234) second downlink transmission data (dd2'), which at least partially characterize said first downlink transmission data (dd1') and is generated depending on the stored data, towards the further device (20).

6. Device (10') according to claim 5, wherein said device (10') is configurable to use for the transmission (234) of the second downlink transmission data (dd2') towards the further device (20) the same transmission resources as used by the base station (100) for a retransmission of said first downlink transmission data (dd1') and/or a transmission of third downlink transmission data which depend on said first downlink transmission data (dd1').

7. Device (10') according to one of the claims 5 to 6, wherein the device (10') is configurable to receive (228) from said base station (100) first control information characterizing at least one of the following: a) transmission resources related to data transmissions (dt) between the base station (100) and the further device (20), b) transmission resources related to data transmissions between the device (10') and the further device (20), c) instructions for the device (10') to perform the method steps according to one of the claims 5 to 6.

8. Base station (100) for a radio communications network (1000; 1000'), wherein said base station (100) is configured to instruct (302) a device (10; 10') of said communications network (1000; 1000') to perform
- A) receiving (210) first uplink transmission data (ud1) transmitted in an uplink direction from a further device (20) towards a base station (100) of said communications network (1000), storing (211) at least part of said received first uplink transmission data (ud1) or a representation thereof, monitoring (212) whether the base station (100) transmits a NACK signal (N1) towards said further device (20), said NACK signal (N1) indicating that the base station (100) did not successfully receive said first uplink transmission data (ud1), and, if the base station (100) transmits a NACK signal (N1) towards said further device (20), transmitting (214) second uplink transmission data (ud2), which at least partially characterizes said first uplink transmission data (ud1) and is generated depending on the stored data, towards the base station (100), and/or
- B) receiving (230) first downlink transmission data (dd1') transmitted in a downlink direction from the base station (100) towards a further device (20), storing (231) at least part of said received first downlink transmission data (dd1') or a representation thereof, monitoring (232) whether the further device (20) transmits a NACK signal (N3) towards said base station (100), said NACK signal (N3) indicating that the further device (20) did not successfully receive said first downlink transmission data (dd1'), and, if the further device (20) transmits a NACK signal (N3) towards said base station (100), transmitting (234) second downlink transmission data (dd2'), which at least partially characterizes said first downlink transmission data (dd1') and is generated depending on the stored data, towards the further device (20).

9. Base station (100) according to claim 8, wherein said base station is configured to transmit (304) to the device (10; 10') first control information characterizing at least one of the following: a) transmission resources related to data transmissions (dt) between the further device (20) and the base station (100), b) transmission resources related to data transmissions between the device (10; 10') and the base station (100), c) instructions for the device (10; 10') to perform at least one of the method steps according to one of the claims 1 to 7.

10. Base station (100) according to one of the claims 8 to 9, wherein said base station (100) is configured to determine (300) one or more candidate devices (10; 10') of said communications network (1000; 1000', 1000''), which may preferably be selected as supporting devices for supporting the base station (100) and/or at least one further device (20; 20') of said communications network (1000) with data transmissions towards at least one further device (20; 20') and/or the base station (100), respectively, wherein said step of determining (300) one or more candidate devices (10; 10') is performed depending on at least one of the following criteria: a) a device-to-device, D2D, link quality characterizing one or more parameters of a direct communication channel (d2d1, d2d2, d2d3) between a device (10; 10') and a further device (20; 20'), b) a status of an electric energy supply, particularly a battery status, of said device (10; 10'), c) processing capabilities of a processing unit (11) of said device (10; 10'), d) device-specific control information indicating that said device (10; 10') may not operate as a supporting device.

11. Base station (100) according to claim 10, wherein said base station (100) is configured to select at least one candidate device (10; 10'; 10'') as a supporting device for supporting the base station (100) and/or at least one further device (20; 20') of said communications network (1000) with data transmissions towards at least one further device (20; 20') and/or the base station (100), respectively.

12. Method of operating network equipment of a radio communications network (1000; 1000'), wherein said method includes generating control information for instructing (302) a device (10; 10') of said communications network (1000; 1000') to perform
- A) receiving (210) first uplink transmission data (ud1) transmitted in an uplink direction from a further device (20) towards a base station (100) of said communications network (1000), storing (211) at least part of said received first uplink transmission data (ud1) or a representation thereof, monitoring (212) whether the base station (100) transmits a NACK signal (N1) towards said further device (20), said NACK signal (N1) indicating that the base station (100) did not successfully receive said first uplink transmission data (ud1), and, if the base station (100) transmits a NACK signal (N1) towards said further device (20), transmitting (214) second uplink transmission data (ud2), which at least partially characterizes said first uplink transmission data (ud1) and is generated depending on the stored data, towards the base station (100), and/or
- B) receiving (230) first downlink transmission data (dd1') transmitted in a downlink direction from the base station (100) towards a further device (20), storing (231) at least part of said received first downlink transmission data (dd1') or a representation thereof, monitoring (232) whether the further device (20) transmits a NACK signal (N3) towards said base station (100), said NACK signal (N3) indicating that the further device (20) did not successfully receive said first downlink transmission data (dd1'), and, if the further device (20) transmits a NACK signal (N3) towards said base station (100), transmitting (234) second downlink transmission data (dd2'), which at least partially characterizes said first downlink transmission data (dd1') and is generated depending on the stored data, towards the further device (20).

13. Method according to claim 12, wherein said network equipment transmits (304) towards the device (10; 10') first control information characterizing at least one of the following: a) transmission resources related to data transmissions (dt) between the further device (20) and the base station (100), b) transmission resources related to data transmissions between the device (10; 10') and the base station (100), c) instructions for the device (10; 10') to perform at least one of the method steps according to one of the claims 1 to 7, and wherein preferably said network equipment and/or said base station (100) determines (300; 310) one or more candidate devices (10; 10') of said communications network (1000), which may preferably be selected as supporting devices for supporting the base station (100) and/or at least one further device (20; 20') of said communications network (1000) with data transmissions towards at least one further device (20; 20') and/or the base station (100) respectively, wherein said step of determining (300; 310) one or more candidate devices (10; 10') is performed depending on at least one of the following criteria: a) a device-to-device, D2D, link quality characterizing one or more parameters of a direct communication channel (d2d1, d2d2, d2d3) between a device (10; 10') and a further device (20; 20'), b) a status of an electric energy supply, particularly a battery status, of said device (10; 10'), c) processing capabilities of a processing unit (11) of said device (10; 10'), d) device-specific control information indicating that said device (10; 10') may not operate as a supporting device.

14. First communication device (2010) for exchanging data with a second communication device (2020) and a third communication device (2030), wherein said first communication device (2010) is configurable to perform the following steps: receive (2100) first transmission data (td1) transmitted from the second communication device (2020) to the third communication device (2030), monitor (2102) whether the third communication device (2030) transmits a NACK signal (N5) to said second communication device (2020), said NACK signal (N5) indicating that the third communication device (2030) did not successfully receive said first transmission data (td1), and, if the third communication device (2030) transmits a NACK signal (N5) to said second communication device (2020), transmit (2104) second transmission data (td2), which at least partially characterizes said first transmission data (td1), to the third communication device (2030).

15. A computer program product embodied on a non-transitory computer readable medium for performing operations, wherein the computer program product comprises instructions, that when executed by a processor (11; 101), perform the operations of a method according to at least one of the claims 12, 13.
